(19) Europäisches Patentamt
European Patent Office
Office européen des brevets

(11) Numéro de publication: **0 238 404 B1**

(12) **FASCICULE DE BREVET EUROPEEN**

(45) Date de publication du fascicule du brevet: **26.09.90**

(51) Int. Cl.⁵: **C08F 220/06**

(21) Numéro de dépôt: **87400561.4**

(22) Date de dépôt: **13.03.87**

(54) **Nouveaux copolymères carboxyliques réticulés utilisables comme épaississants en milieu aqueux et leur préparation.**

(30) Priorité: **14.03.86 FR 8603655**

(43) Date de publication de la demande: **23.09.87 Bulletin 87/39**

(45) Mention de la délivrance du brevet: **26.09.90 Bulletin 90/39**

(84) Etats contractants désignés: **BE DE GB IT NL**

(56) Documents cités:
**EP-A- 0 013 836**
**US-A- 4 421 902**

(73) Titulaire: **MANUFACTURE DE PRODUITS CHIMIQUES PROTEX, 2, place Joffre, F-75007 Paris(FR)**

(72) Inventeur: **Ribba, Alain, Les Fillonières, F-37380 Crotelles(FR)**

(74) Mandataire: **Colas, Jean-Pierre et al, Cabinet de Boisse 37, avenue Franklin D. Roosevelt, F-75008 Paris(FR)**

**EP 0 238 404 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention se rapporte à de nouveaux copolymères carboxyliques réticulés utilisables comme agents épaississants en milieu aqueux, ainsi qu'à leur préparation.

Des produits capables de se dissoudre dans l'eau en gonflant et capables d'agir comme épaississants trouvent de nombreuses applications dans les industries textiles, papetières, pharmaceutiques, cosmétiques, pétrolières, alimentaires, ou autres. Parmi les produits employés à cet effet, les polymères carboxyliques synthétiques, obtenus à partir de monomères carboxyliques insaturés, sont les plus communément utilisés. Les polymères carboxyliques peuvent être des homopolymères d'un monomère carboxylique, insaturé et polymérisable, tel que l'acide acrylique, l'acide méthacrylique, l'anhydride maléique et l'acide itaconique ou des copolymères de tels monomères. L'action épaississante de ces polymères est obtenue par une réticulation en utilisant, comme agents réticulants, divers composés polyfonctionnels décrits dans de nombreux brevets, à des concentrations de 0,1 à 10 %. De tels polymères carboxyliques sont décrits, par exemple, dans les brevets français Nos. 2 131 128 et 2 281 389, les brevets des Etats-Unis d'Amérique Nos. 2 798 053, 2 985 625 et 1 958 679, les brevets anglais Nos. 80 0011 et 1 090 204, et les brevets d'Allemagne Fédérale Nos. 1 103 585, 1 138 225 et 2 017 451.

On connait également d'autres polymères carboxyliques, comme ceux décrits dans les brevets des Etats-Unis d'Amérique Nos. 3 915 921 et 3 940 351, qui sont des copolymères d'acide carboxylique insaturé,d'un agent de réticulation et d'au moins un ester acrylate ou méthacrylate d'alkyle dont le radical alkyle comporte de 10 à 30 atomes de carbone. On connait également par le brevet des Etats-Unis d'Amérique No. 4 062 817 d'autres polymères carboxyliques de ce genre qui sont des copolymères d'acide carboxylique insaturé, d'un agent de réticulation, d'au moins un ester acrylate ou méthacrylate d'alkyle dont le groupe alkyle comporte 10 à 30 atomes de carbone, et en outre, d'un autre ester acrylate ou méthacrylate d'alkyle dont le groupe alkyle contient 1 à 8 atomes de carbone.

Les polymères carboxyliques décrits dans tous ces brevets sont utilisés comme épaississants en milieu aqueux. Ils se dispersent ou se dissolvent dans l'eau ou dans des solvants hydroalcooliques en augmentant la viscosité du milieu, le maximum de l'augmentation de viscosité étant atteint après neutralisation des groupes carboxyliques par une base, telle que l'ammoniaque, la soude ou une amine. De telles propriétés sont utilisées dans de nombreuses applications. Toutefois, dans certains cas, les polymères carboxyliques ne donnent pas totalement satisfaction, soit que les propriétés rhéologiques ne sont pas suffisantes, soit que le milieu à épaissir contienne des sels dissous ce qui a pour conséquence une perte importante des propriétés épaississantes des polymères carboxyliques, se traduisant par une chute de la viscosité du milieu.

L'invention a pour buts de fournir de nouveaux polymères carboxyliques réticulés ayant des propriétés rhéologiques améliorées et ayant une meilleure résistance aux sels dissous, ainsi qu'un procédé pour la préparation de ces polymères.

Plus précisément l'invention concerne des copolymères carboxyliques réticulés obtenus par copolymérisation d'un monomère carboxylique insaturé, d'un agent de réticulation et, facultativement, d'un acrylate ou méthacrylate d'alkyle, caractérisés en ce qu'ils sont obtenus en copolymérisant les monomères suivants dans les proportions en poids indiquées :

a) au moins 50% d'au moins un polymères carboxylique insaturé,

b) de 5 à 25 % d'au moins un ester de l'acide acrylique ou méthacrylique avec un polyalkylène glycol ayant la formule générale :

$$CH_2 = \overset{\displaystyle R}{\overset{|}{C}} - CO_2 - [R_1O]_n - H$$

dans laquelle
R est H ou $CH_3$,
$R_1$ est un groupe alkylène divalent de 2 à 6 atomes de carbone inclusivement, et
n est un nombre entier compris entre 2 et 25,

c) de 0 à 20 % d'au moins un ester d'acide acrylique de la formule générale

$$CH_2 = \overset{\displaystyle R}{\overset{|}{C}} - COO - R_2$$

dans laquelle R est H ou $CH_3$ et $R_2$ est un groupe alkyle, linéaire ou ramifié, comportant 4 à 20 atomes de carbone, et

d) de 0,1 à 5 % d'au moins un agent de réticulation choisi parmi les monomères insaturés contenant au moins deux groupes vinyliques terminaux

$$CH_2 = C< .$$

Les copolymères carboxyliques de la présente invention sont des polymères ayant des poids moléculaires de plus d'environ 1000 jusqu'à plusieurs millions, habituellement de plus d'environ 10 000 jusqu'à un million et plus.

<u>Monomères a)</u>

Les monomères carboxyliques insaturés utilisés dans la préparation des polymères de l'invention sont des acides carboxyliques oléfiniquement insaturés comportant au moins une double liaison carbone-carbone activée et au moins un groupe carboxyle.

Ces acides comportent une double liaison oléfinique qui se polymèrise facilement à cause de sa présence dans la molécule soit en position alpha,béta par rapport au groupe carboxyle, soit sous forme d'un groupe méthylène terminal tel que

$$CH_2 = C< .$$

Les acides oléfiniquement insaturés de cette classe englobent l'acide acrylique, l'acide méthacrylique, l'acide éthacrylique, l'acide crotonique, l'acide styrylacrylique, l'acide itaconique, l'acide maléique, l'acide fumarique. Des anhydrides d'acide, tels que l'anhydride maléique, sont également compris dans l'expression "acide carboxylique".

Les monomères préférés de l'invention sont l'acide acrylique $CH_2 = CH - COOH$ et l'acide méthacrylique. Un autre monomère intéressant est l'anhydride maléique. Ils peuvent être utilisés séparément ou en mélange les uns avec les autres pour former les polymères de l'invention. Ils constituent de 50 à 95 % en poids et de préférence de 80 à 95 % en poids du polymère de l'invention.

<u>Monomères b)</u>

Les esters de l'acide acrylique ou de l'acide méthacrylique et d'un polyalkylène glycol utilisés dans la présente invention, ont pour formule générale :

$$CH_2 = \overset{R}{\overset{|}{C}} - COO - [R_1 - O]_n H$$

dans laquelle R est H ou $CH_3$, $R_1$ est un groupe alkylène divalent tel que éthylène $[- CH_2 - CH_2 -]$, propylène $[- \underset{CH_3}{\underset{|}{CH}} - CH_2 -]$, ou tétraméthylène (appelé aussi butylène $(CH_2-CH_2-CH_2-CH_2)$, n est un nombre entier de 2 à 25 inclusivement.

Ces esters sont obtenus par une réaction d'estérification de l'acide acrylique ou de l'acide méthacrylique avec un polyalkylène glycol de façon qu'un seul groupe hydroxyle du polyalkylène glycol réagisse avec l'acide pour former le monoester acrylique ou méthacrylique du polyalkylène glycol. Les polyalkylène glycols utilisables sont, par exemple, le diéthylène glycol, le triéthylène glycol, le tétraéthylène glycol, le polyéthylène glycol de PM 400, le polyéthylène glycol de PM 1000, le dipropylène glycol, le tripropylène glycol, le polypropylène glycol de PM 200, le polypropylène glycol de PM 400, le polypropylène glycol de PM 1000, le polytétraméthylène glycol de PM 650, le polytétraméthylène glycol de PM 100 (PM = Poids Moléculaire). La liste n'étant pas limitative, les polyalkylène glycols peuvent être utilisés séparément ou en mélange lors de la réaction d'estérification.

Les esters peuvent être également obtenus par réaction de l'oxyde d'éthylène, de l'oxyde de propylène ou de l'oxyde de butylène ou d'un mélange de ceux-ci, avec de l'acide acrylique ou l'acide méthacrylique, ou encore avec un acrylate ou un méthacrylate d'hydroxyalkyle de formule

$$CH_2 = \overset{R}{\overset{|}{C}} - COO - R_3 - OH$$

dans laquelle R est H ou $CH_3$, $R_3$ est un groupe alkylène divalent tel que $-(CH_2 - CH_2)-$, $-(\underset{CH_3}{\underset{|}{CH}} - CH_2)-$ ou $-(CH_2)_4-$.

Ces méthodes de synthèse sont connues de l'homme de l'art et ne font pas partie de l'invention.

Des monomères b) utiles dans l'invention sont, par exemple, le monoacrylate de diéthylène glycol, le monoacrylate de tétraéthylène glycol, le monoacrylate de triéthylène glycol, le monoacrylate de dipropylène glycol, le monoacrylate de tripropylène glycol, le monoacrylate de dibutylène glycol, le monométhacrylate de diéthylène glycol, le monométhacrylate de triéthylène glycol, le monométhacrylate de tétraéthylène glycol, le monométhacrylate de dipropylène glycol, le monométhacrylate de tripropylène glycol, le monométhacrylate de dibutylène glycol, le monoacrylate de polyéthylène glycol de PM 200, le monométhacrylate de polyéthylène glycol de PM 200, le monoacrylate de polyéthylène glycol de PM 400, le monométhacrylate de polyéthylène glycol de PM 400, le monoacrylate de polyéthylène glycol de PM 600, le monométhacrylate de polyéthylène glycol de PM 600, le monoacrylate de polyéthylène glycol de PM 1000, le monométhacrylate de polyéthylène glycol de PM 1000, le monoacrylate de polypropylène glycol de PM 200, le monométhacrylate de polypropylène glycol de PM 200, le monoacrylate de polypropylène glycol de PM 400, le monométhacrylate de polypropylène glycol de PM 400, le monoacrylate de polypropylène glycol de PM 1000, le monométhacrylate de polypropylène glycol de PM 1000, le monoacrylate de polytétraméthylène glycol de PM 650, le monoacrylate de polytétraméthylène glycol de PM 1000, le monométhacrylate de polytétraméthylène glycol de PM 1000, le monométhacrylate de polytétraméthylène glycol de PM 650.

Ces monomères peuvent être utilisés seuls ou en mélange les uns avec les autres pour former les polymères de l'invention. Ils constituent de 5 à 25 % en poids et de préférence de 5 à 20 % en poids du polymère de l'invention.

Les monomères préférés de l'invention sont le monoacrylate de polyéthylène glycol de PM 200, le monoacrylate de polypropylène glycol de PM 200, le monométhacrylate de polypropylène glycol de PM 200.

Monomères c)

Ces esters de l'acide acrylique ou de l'acide méthacrylique que l'on peut utiliser, de façon facultative, dans les polymères de l'invention ont pour formule générale :

$$CH_2 = \overset{R}{\overset{|}{C}} - COO - R_2$$

dans laquelle
R est H ou $CH_3$, et
$R_2$ est un groupe alkyle linéaire ou ramifié comportant 4 à 20 atomes de carbone.

Ces esters acryliques ou méthacryliques peuvent être incorporés dans les polymères carboxyliques de l'invention pour certaines applications. Dans ce cas, ils sont présents en quantités d'environ 1 à 20 % en poids et de préférence de 5 à 15 % en poids. Des exemples de ce type de monomères sont l'acrylate de butyle, l'acrylate d'hexyle, l'acrylate d'heptyle, l'acrylate d'octyle, l'acrylate de 2-éthylhéxyle, l'acrylate de lauryle, l'acrylate d'isodécyle, le méthacrylate de butyle, le méthacrylate d'isobutyle, le méthacrylate de tertiobutyle, le méthacrylate d'octyle, le méthacrylate d'heptyle, le méthacrylate d'hexyle, le méthacrylate d'isodécyle, le méthacrylate d'hexadécyle, le méthacrylate de stéaryle, et le méthacrylate de lauryle.

Ces esters peuvent être utilisés seuls ou en mélange les uns avec les autres pour former les polymères de l'invention.

Les monomères c) préférés de l'invention sont l'acrylate de 2-éthylhexyle, l'acrylate de lauryle et le méthacrylate de stéaryle.

Monomères d)

Les agents de réticulation d) utilisés dans les polymères carboxyliques de l'invention, sont des monomères contenant au moins deux groupes vinyliques terminaux

$$CH_2 = C\langle .$$

et ils peuvent être des hydrocarbures, des esters, des nitriles, des acides, des éthers, des cétones, des alcools, et tous composés polyinsaturés contenant au moins deux groupes vinyliques

$$CH_2 = C\langle .$$

Des exemples non limitatifs de composés utilisables comme agents de réticulation et répondant à la définition ci-dessus sont le divinyl benzène, le divinyl naphtalène, le butadiène, le polybutadiène de bas poids moléculaire, l'isoprène, le diacrylate d'éthylène glycol, le diméthacrylate d'éthylène glycol, le triacrylate de triméthylol propane, le triméthacrylate de triméthylol propane,le triacrylate de pentaérythritol, le tétraacrylate de pentaérythritol, le méthacrylate d'allyle, l'acrylate d'allyle, l'acrylate de méthallyle, l'acrylate de crotyle, le cinnamate d'allyle, l'oxalate de diallyle, le phtalate de diallyle, le maléate d'allyle, le maléate de diallyle, les citrates de diallyle et de triallyle, le phosphate de diallyle, le phosphate de triallyle, le phosphite de diallyle, le phosphite de triallyle, l'anhydride acrylique, l'anhydride méthacrylique, le divinyl éther, le diallyl éther, le diméthallyl éther, le diallyl éther de l'éthylène glycol, le diallyl et le triallyl éther du glycérol, le diallyl et le triallyl éther du triméthylol propane, le triallyl et le tétraallyl éther du pentaérythritol, le polyallyl éther du sucrose, l'hexaallyl triméthylène trisulfone, le triallyl cyanurate, le tétraallyl oxyéthane, le tétraallyl étain, le tétravinyl silane, le triacryloyl triazine, le triméthacryloyl triazine, le triallyl amine, le méthylène bis acrylamide, le divinyl dioxane.

Les agents de réticulation d) sont utilisés isolément ou en mélange pour former les polymères de l'invention dans des quantités comprises entre 0,1 et 5 % en poids et, préférentiellement, dans des quantités comprises entre 0,1 et 2 % en poids. Des agents de réticulation particulièrement préférés pour la préparation des polymères carboxyliques de l'invention sont le méthacrylate d'allyle, le phosphate de triallyle, le triallyl éther du pentaérythritol, le polyallyl éther du sucrose, le diallyl éther du triméthylopropane, le tétraallyl oxyéthane.

Préparation des polymères

La polymérisation des monomères a)-d) selon l'invention est habituellement effectuée en présence d'un catalyseur radicalaire dans un réacteur fermé et agité, sous atmosphère inerte, sous la pression autogène ou sous une pression produite artificiellement, ou encore dans un réacteur ouvert et agité sous atmosphère inerte ou au reflux du solvant à pression atmosphérique, en discontinu ou avec addition continue des réactifs. La température de polymérisation est généralement comprise entre 0° et 150°C. Une température comprise entre 25°C et 100°C est habituellement utilisée pour conduire des polymérisations avec 90 à 100 % de rendement.

Les catalyseurs radicalaires, de préférence organiques, générant des radicaux libres initiateurs de la polymérisation, sont des composés peroxydés, tels que, par exemple, le peroxyde de benzoyle, le peroxyde de lauroyle, le peroxyde de capryle, le peroxyde d'acétyle, le peroxyde de tertiobutyle, le peroxyde de pélargonyle, le perbenzoate de tertiobutyle, le perphtalate de ditertiobutyle, le peroxy dicarbonate de di(2-éthyl-héxyle), le peracétate de sodium, les persulfate d'ammonium, l'eau oxygénée et tous les produits de ce type. D'autres catalyseurs radicalaires utiles sont des composés azoïques tels que l'azobis-isobutyronitrile, l'azobis-isovaléronitrile et beaucoup d'autres. Il est possible de les utiliser seuls ou en mélange les uns avec les autres pour obtenir les polymères carboxylés de l'invention.

La polymérisation des monomères selon l'invention est conduite dans un solvant organique dans lequel les monomères sont solubles, mais dans lequel les polymères sont insolubles. Ainsi, lors de la polymérisation, les polymeres précipitent sous forme de poudre fine. Il suffit d'éliminer le solvant par filtration et évaporation pour récupérer les polymères carboxyliques. Les solvants doivent être inertes vis-à-vis des monomères et des polymères. Ce sont de préférence des hydrocarbures aliphatiques ou aromatiques, mais il est possible d'utiliser tout autre solvant répondant aux exigences ci-dessus, tels que des hydrocarbures halogénés, des esters, des alcools et autres. Tous ces solvants doivent avoir un point d'ébullition compris entre 25 et 150°C de façon à pouvoir être éliminés assez facilement en vue de la récupération des polymères.

Comme solvants appropriés, on peut citer le benzène, le toluène, l'hexane, l'heptane, le cyclohexane, le tétrachlorure de carbone, le chlorure de méthylène, le chloroforme, le tétrachloroéthylène, le trichloroéthylène, le trichloroéthane, l'acétate d'éthyle, l'acétate de méthyle, le méthanol, l'éthanol, le butanol, le chlorofluorométhane, le chlorofluoroéthane et le trichlorotrifluoroéthane. Les solvants préférés sont le benzène, l'acétate d'éthyle et le méthanol.

Lorsque les solvants de polymérisation utilisés sont polaires, tels que des esters ou des alcools, il est

de plus possible de neutraliser une partie des monomères carboxyliques pour éviter le gonflement des polymères par les solvants et pour éviter la formation de gels. La neutralisation s'opère avec des bases telles la soude, la potasse, le carbonate de sodium, l'ammoniaque, certaines amines, comme la morpholine et la monoéthanolamine. La neutralisation des monomères carboxyliques se fait avant la polymérisation et peut concerner de 1 à 50 % des groupes carboxyliques mis en oeuvre. Cette neutralisation se fait préférentiellement sans apport d'eau.

La concentration des monomères dans le solvant de polymérisation peut varier de5 à 35 % et de préférence de 10 à 25 % de façon que la température de polymérisation soit contrôlable et que les polymères obtenus soient exempts d'agglomérats. Avec des concentrations plus élevées, la réaction de polymérisation est fortement exothermique de sorte qu'il est difficile de maintenir la température de polymérisation choisie. Il est en effet primordial de contrôler la température de polymérisation pour obtenir des polymères ayant un poids moléculaire désiré.

<u>Propriétés et usages</u>

Les copolymères carboxyliques réticulés de l'invention donnent dans l'eau, des gels limpides qui selon la quantité d'eau utilisée, sont coulables ou solides. L'épaississement dans l'eau est obtenu dès la dissolution des polymères carboxyliques à pH 2-3, mais il est fortement augmenté par neutralisation des groupes carboxyliques des polymères, l'optimum étant obtenu pour des pH de 7 à 9. Des bases de neutralisation utilisables sont l'ammoniaque, la soude, la potasse, le carbonate de sodium, des amines telles que la monoéthanolamine, la diéthanolamine et la monoéthylamine. Il est également possible d'épaissir des milieux hydroalcooliques ou autres milieux contenant des solvants en neutralisant les polymères carboxyliques de l'invention par des amines primaires, secondaires ou tertiaires.

Les copolymères carboxyliques selon l'invention sont particulièrement efficaces lorsque le milieu à épaissir contient des sels dissous, en particulier du chlorure de sodium, comparativement aux autres polymères déjà connus. L'effet de sel bien connu a pour conséquence de faire chuter les propriétés épaississantes des polymères carboxyliques connus auparavant. Cet effet de sel est moins important avec les polymères carboxylés selon l'invention, en particulier grâce à la présence dans les polymères de l'invention des chaînes polyalkylène glycol apportées par les esters acrylate ou méthacrylate de polyalkylène glycol définis ci-dessus.

Les copolymères carboxyliques de l'invention sont efficaces pour épaissir des milieux aqueux à partir de 0,1 % en poids de polymère par rapport au milieu à épaissir. Les doses communément utilisées sont comprises entre 0,1 % et 2%.

Les copolymères carboxyliques de l'invention peuvent, par exemple être utilisés comme épaississants dans des pâtes d'impression pour textiles, pour la préparation de cosmétiques et de compositions pharmaceutiques, pour le traitement de minerais, dans des matières d'extinction de feu, dans des bains de couchage pour papier, pour l'extraction du pétrole ou bien d'autres applications.

L'invention est décrite plus complètement encore par les exemples non limitatifs suivants qui sont donnés à titre d'illustration.

<u>EXEMPLE I</u>

Dans un récipient de réaction équipé d'un thermomètre, d'un agitateur et d'un condenseur à reflux, on charge 350 g de benzène et on chauffe à 80°C au reflux après avoir purgé à l'azote.

Dans une ampoule d'addition, on prépare un mélange constitué de 550 g de benzène, 188,5 g d'acide acrylique, 10 g d'acrylate de polypropylène glycol de PM 200 (acrylate de PPG 200), 1,5 g de méthacrylate d'allyle et 0,2 g d'azo-bis-isobutyronitrile (AIBN). Après dissolution et purge par de l'azote, le mélange est introduit en 3 h dans le réacteur contenant le benzène au reflux (température d'environ 80°C). Puis le milieu est maintenu 4 heures à 80°C et est refroidi. Au cours de la réaction, un précipité blanc est apparu dans le réacteur. A la fin de la réaction on a une suspension d'environ 18 % de polymère dans le benzène. Ce polymère est ensuite isolé par filtration et séché. Le rendement de polymérisation est de 98 %. Le polymère carboxylique obtenu a pour composition acide acrylique 94,25 %, acrylate de PPG 200 5 %, et méthacrylate d'allyle 0,75 % en poids.

Des échantillons de ce polymère sont dissous dans de l'eau à des concentrations de 1 et 0,5 % en poids et neutralisés avec de l'ammoniaque à un pH d'environ 7.

Les viscosités des solutions ainsi obtenues, mesurées au viscosimètre Brookfield RVT à 10 tours/minute, sont, respectivement, de 145 000 mPas (centipoises) et 74 000 mPas.

Un échantillon de ce polymère est dissous dans de l'eau saline, contenant 1 % de chlorure de sodium, à une concentration de 1 % en poids et neutralisés à un pH d'environ 8 par de l'ammoniaque. La viscosité de cette solution, mesurée au viscosimètre Brookfield à 10 tours/ minute, est de 15 000 mPas.

A titre de comparaison, on utilise un polymère préparé dans des conditions identiques mais sans l'acrylate de PPG 200, ayant pour composition acide acrylique 99,25 % et méthacrylate d'allyle 0,75 % en poids, représentatif des polymères de la technique antérieure. Les solutions aqueuses préparées dans les mêmes conditions que ci-dessus, ont pour viscosité 160 000 mPas à 1 % ; 80 000 mPas à 0,5 % et 300 à 1 % dans de l'eau saline à 1 %.

EXEMPLE II

Dans un récipient de réaction équipé d'un thermomère, d'un agitateur et d'un condenseur à reflux, on charge 1100 g d'acétate d'éthyle, 180 g d'acide acrylique, 20 g d'acrylate de polypropylène glycol de PPM 200 (acrylate de PPG 200), 10 g de carbonate de potassium, 0,5 g de méthacrylate d'allyle et 0,2 d'azobisobutyronitrile (AIBN). Après dissolution du carbonate de potassium, le mélange est porté au reflux pendant 4 heures. Un précipité blanc se forme au bout de 4 h, on ajoute encore 0,1 g de AIBN et on maintient encore 2 h au reflux. Après refroidissement le polymère est sous forme d'une suspension fine dans le solvant à une concentration d'environ 15 % de polymère. Le polymère est isolé et séché. Le rendement de la polymérisation est d'environ 97,5 %. Le polymère carboxylique a pour composition 89,75 % d'acide acrylique, 10 % d'acrylate de PPG 200 et 0,25 % d'agent réticulant en poids.

Les viscosités des solutions à 1 % et 0,5 % de concentration dans l'eau, et à 1 % de concentration dans l'eau contenant 1 % de NaCl, après neutralisation à un pH ~ 8 par de l'ammoniaque, sont respectivement 62 000 mPas, 38 500 mPas et 4 950 mPas, comme mesurées au viscosimètre Brookfield à une vitesse de 10 tours/minute.

EXEMPLE III

Dans un récipient de réaction muni d'un condenseur à reflux, d'un thermomètre et d'un agitateur, on charge 280 g de méthanol que l'on chauffe au reflux. Dans une ampoule d'addition on prépare un mélange formé de 200 g de méthanol, 95 g d'acide acrylique, 47 g de potasse en paillettes, 5 g d'acrylate de polyéthylène glycol de PM 400 (acrylate de PEG 400), 1 g de méthacrylate d'allyle et 0,15 g de AIBN. Après dissolution de la potasse dans le mélange, on verse 80 ml du mélange dans le réacteur au reflux. La réaction démarre et un précipité blanc apparaît. Le reste du mélange est alors additionné en 3 h dans le réacteur à la température du reflux. Puis on ajoute 0,1 g d'AIBN et on laisse la réaction se poursuivre pendant encore 4 heures. Après refroidissement on obtient une suspension de polymère sous forme de poudre fine dans le méthanol à une concentration d'environ 20 % de polymère. Le polymère est isolé et séché. Le rendement de la polymérisation est d'environ 98 %. Le polymère carboxylique obtenu a pour composition, en poids, 94 % d'acide acrylique, 5 % d'acrylate de PEG 400, 1 % de méthacrylate d'allyle.

Les viscosités des solutions à 1 % et 0,5 % de concentration dans l'eau et à 1 % dans l'eau contenant 1 % de NaCl, après neutralisation à un pH d'environ 8 par de l'ammoniaque, sont respectivement de 95 000 mPas, 35 000 mPas et 1 700 mPas, comme mesurées au viscosimètre Brookfield à une vitesse de 10 tours/ minute.

EXEMPLE IV

On polymérise dans les conditions décrites dans l'Exemple II, un mélange de monomères comprenant 180 g d'acide acrylique, 1,5 g de triallyl éther de pentaérythritol, 10 g de méthacrylate de stéaryle, 10 g de carbonate de potassium, 10 g de méthacrylate de polytétraméthylène glycol de PM 650 (méthacrylate de PolyTHF 650) et 0,2 g d'AIBN.

Les viscosités des solutions à 1 % et 0,5 % de concentration dans l'eau et à 1 % dans l'eau contenant 1 % de NaCl, après neutralisation à un pH d'environ 8 par de l'ammoniaque sont, respectivement, de 120 000 mPas, 70 000 mPas et 5 500 mPas.

EXEMPLE V

On polymérise dans les conditions décrites dans les Exemples I, II ou III, une série de mélanges de monomères. Dans le Tableau I, sont indiquées les différentes quantités des monomères mis en oeuvre.

Dans le Tableau II sont reportées les viscosités obtenues par dissolution à 1 % et 0,5 % de concentration dans l'eau et à 1 % de concentration dans l'eau contenant 1 % de NaCl des différents polymères ainsi obtenus, après neutralisation à un pH d'environ 8 par $NH_4OH$.

TABLEAU I

| Monomères / Essais | 1 | 2 | 3 | 4 | 5 | 6 | 7 | 8 |
|---|---|---|---|---|---|---|---|---|
| *Acide acrylique | 190 | 160 | 180 | 180 | 180 | 170 | 180 | 155 |
| *Acrylate de DEG | 10 | - | - | - | - | - | - | - |
| *Acrylate de PEG 1000 | - | - | 20 | - | - | - | - | - |
| *Méthacrylate de PPG 200 | - | 40 | - | - | 10 | 10 | 20 | 10 |
| *Méthacrylate de PPG 1000 | - | - | - | 20 | - | - | - | - |
| *Acrylate de 2E. H | - | - | - | - | 10 | - | - | - |
| Méthacrylate de stéaryle | - | - | - | - | - | 20 | - | 35 |
| Méthacrylate d'allyle | 1 | 1,5 | 1 | - | - | 1 | - | 1,5 |
| *Allyl éther de P.E | - | - | - | 1,5 | - | - | - | - |
| Allyl éther de sucrose | - | - | - | - | 2,2 | - | - | - |
| *Diallyl éther de TMP | - | - | - | - | - | - | 1,5 | - |
| AIBN | 0,2 | 0,2 | 0,2 | 0,2 | - | 0,2 | 0,25 | 0,25 |
| Peroxyde de lauroyle | - | - | - | - | 0,3 | - | - | - |
| *Milieu | Bz | Bz | Ac.E | Ac.E | Bz | Ac.E | Bz | Bz |

*Acrylate de DEG = Monoacrylate de diéthylène glycol
Acrylate de PEG 1000 = Monoacrylate de polyéthylène glycol PM 1000
Méthacrylate de PPG 200 = Monométhacrylate de polypropylène glycol PM 200
Méthacrylate de PPG 1000 = Monométhacrylate de polypropylène glycol PM 1000
Acrylate de 2. EH = Acrylate de 2-éthyl-hexyle
Allyl éther de PE = Triallyl éther de pentaérythritol
Diallyl éther de TMP = Diallyl éther de triméthylol propane
AIBN = Azobisisobutyronitrile
Bz = Benzène
Ac.E = Acétate d'éthyle

TABLEAU II

| | 1 | 2 | 3 | 4 | 5 | 6 | 7 | 8 |
|---|---|---|---|---|---|---|---|---|
| 1 % dans l'eau | 67 500 | 110 000 | 72 000 | 105 000 | 125 000 | 175 000 | 98 500 | 85 000 |
| 0,5 % dans l'eau | 41 400 | 35 500 | 38 000 | 43 000 | 55 000 | 78 000 | 36 500 | 25 000 |
| 1 % dans $H_2O$+NaCl | 4 500 | 5 500 | 95 000 | 7 500 | 6 500 | 10 500 | 9 650 | 3 500 |

Les viscosités sont mesurées au viscosimètre Brookfield à une vitesse de 10 tours/minute

**Revendications**

1. Copolymères carboxyliques réticulés obtenus par copolymérisation d'un monomère carboxylique insaturé, d'un agent de réticulation et, facultativement, d'un acrylate ou méthacrylate d'alkyle, caractérisés en ce qu'ils sont obtenus en copolymérisant les monomères suivants dans les proportions en poids indiquées :

a) au moins 50% d'au moins un monomère carboxylique insaturé,

b) de 5 à 25 % d'au moins un ester de l'acide acrylique ou méthacrylique avec un polyalkylène glycol ayant la formule générale :

$$CH_2 = \overset{\displaystyle R}{\overset{|}{C}} - CO_2-[R_1O]_n-H$$

dans laquelle
R est H ou $CH_3$,
$R_1$ est un groupe alkylène divalent de 2 à 6 atomes de carbone inclusivement, et
n est un nombre entier compris entre 2 et 25,

c) de 0 à 20 % d'au moins un ester d'acide acrylique de la formule générale :

$$CH_2 = \overset{\displaystyle R}{\overset{|}{C}} - COO - R_2$$

dans laquelle R est H ou $CH_3$ et $R_2$ est un groupe alkyle, linéaire ou ramifié, comportant 4 à 20 atomes de carbone, et

d) de 0,1 à 5 % d'au moins un agent de réticulation choisi parmi les monomères insaturés contenant au moins deux groupes vinyliques terminaux

$$CH_2 = C\!<\ .$$

.2. Copolymères selon la revendication 1, caractérisés en ce que le monomère carboxylique insaturé a) est choisi parmi l'acide acrylique, l'acide méthacrylique et l'anhydride maléique.

3. Copolymères suivant la revendication 1 ou 2, caractérisés en ce que le monomère b) est choisi parmi le monoacrylate de diéthylène glycol, le monoacrylate de polyéthylène glycol de PM 200, le monoacrylate de polyéthylène glycol de PM 1000, le monoacrylate de polypropylène glycol de PM 200, le monométhacrylate de polypropylène glycol de PM 200, le monométhacrylate de polypropylène glycol de PM 1000, et le monométhacrylate de polytétraméthylène glycol de PM 650 (PM signifie poids moléculaire).

4. Copolymères suivant l'une quelconque des revendications 1 à 3, caractérisés en ce qu'ils contiennent un monomère c) choisi parmi l'acrylate de 2-éthyl-hexyle et le méthacrylate de stéaryle.

5. Copolymères suivant l'une quelconque des revendications 1 à 4, caractérisés en ce que l'agent de réticulation d) est choisi parmi le méthacrylate d'allyle, le diallyléther de triméthylol propane, le triallyl éther de pentaérythritol, et le polyallyl éther de sucrose.

6. Procédé de préparation d'un copolymère carboxylique réticulé tel que défini à l'une quelconque des revendications 1 à 5, caractérisé en ce qu'on polymérise les monomères a), b), d) et, facultativement, c) dans un solvant inerte dans lequel les monomères sont solubles et les copolymères insolubles.

7. Procédé suivant la revendication 6, caractérisé en ce qu'on utilise comme solvant le benzène, l'acétate d'éthyle ou le méthanol.

8. Procédé suivant la revendication 6 ou 7, caractérisé en ce qu'on effectue la polymérisation à une température comprise entre 25 et 100°C et à l'aide d'un catalyseur organique.

9. Procédé selon la revendication 8, caractérisé en ce que le catalyseur est choisi parmi l'azobisobutyronitrile, le peroxyde de lauroyle et le peroxyde de benzoyle.

10. Utilisation des copolymères définis à l'une quelconque des revendications 1 à 5, neutralisés par une base organique ou minérale, comme épaississants pour des milieux aqueux ou des milieux organiques, ou des systèmes contenant des mélanges de ceux-ci.

**Patentansprüche**

1. Vernetztes Carboxyl-Copolymeres, erhalten durch Copolymerisation eines ungesättigten Carboxylmonomeren, eines Vernetzungsmittels und gegebenenfalls eines Alkylacrylats oder Alkylmethacrylats, dadurch gekennzeichnet, daß es erhalten wird durch Copolymerisation der folgenden Monomeren in den

genannten Gewichtsverhältnissen:

a) wenigstens 50% wenigstens eines ungesättigten Carboxylmonomeren,

b) 5 bis 25% wenigstens eines Acrylsäure- oder Methacrylsäureesters mit einem Polyalkylenglycol der allgemeinen Formel:

$$CH_2 = \overset{\displaystyle R}{\overset{|}{C}} - CO_2-[R_1O]_n-H$$

worin

R H oder $CH_3$ ist

$R_1$ eine zweiwertige Alkengruppe mit 2 bis 6 C-Atomen ist, und

n eine ganze Zahl im Bereich von 2 bis 25 ist,

c) 0 bis 20% wenigstens eines Acrylsäureesters der allgemeinen Formel:

$$CH_2 = \overset{\displaystyle R}{\overset{|}{C}} - COO - R_2$$

worin

R H oder $CH_3$ ist und

$R_2$ eine geradlinige oder verzweigte Alkylgruppe ist, enthaltend 4 bis 20 Kohlenstoffatome und

d) 0,1 bis 5% wenigstens eines Vernetzungsmittels, ausgewählt aus ungesättigten Monomeren, enthaltend wenigstens zwei endständige Vinylgruppen

$$CH_2 = C< .$$

2. Copolymere nach Anspruch 1, dadurch gekennzeichnet, daß das ungesättige Carboxylmonomere a) ausgewählt ist aus Acrylsäure, Methacrylsäure und Maleinsäureanhydrid.

3. Copolymere nach Ansprüchen 1 oder 2, dadurch gekennzeichnet, daß das Monomere b) ausgewählt ist aus Diethylenglycolmonoacrylat, Polyethylenglycol-monoacrylat mit PM 200, Polyethylenglycol-monoacrylat mit PM 1000, Polypropylenglycol-monoacrylat mit PM 200, Polypropylenglycol-monomethacrylat mit PM 200, Polypropylenglycol-monomethacrylat mit PM 1000, Polytetramethylenglycol-monomethacrylat mit PM 650 (PM bezeichnet das Molekulargewicht).

4. Copolymere nach irgendeinem der Ansprüche 1 bis 3, dadurch gekennzeichnet, daß sie ein Monomeres c) enthalten, das ausgewählt ist aus 2-Ethyl-hexylacrylat und Stearyl-methacrylat.

5. Copolymere nach irgendeinem der Ansprüche 1 bis 4, dadurch gekennzeichnet, daß sie ein Vernetzungsmittel d) enthalten, das ausgewählt ist aus Allyl-methacrylat, Trimethylolpropan-diallylether, Pentaerythrittriallylether und Saccharose-polyallylether.

6. Verfahren zur Herstellung der vernetzten Carboxylpolymeren gemäß der Definition jeder der Ansprüche 1 bis 5, dadurch gekennzeichnet, daß man die Monomeren a), b), d) und gegebenenfalls c) in einem inerten Lösungsmittel polymerisiert, in dem die Monomeren löslich und die Copolymeren unlöslich sind.

7. Verfahren nach Anspruch 6, dadurch gekennzeichnet, daß man als Lösungsmittel Benzol, Essigsäureethylester oder Methanol einsetzt.

8. Verfahren nach den Ansprüchen 6 oder 7, dadurch gekennzeichnet, daß man die Polymerisation bei einer Temperatur im Bereich von 25 bis 100°C und mit Hilfe eines organischen Katalysators durchführt.

9. Verfahren gemäß Anspruch 8, dadurch gekennzeichnet, daß der Katalysator ausgewählt ist aus Azo-isobutyronitril, Laurylperoxid oder Benzoylperoxid.

10. Verwendung der Copolymeren, definiert gemäß irgendeinem der Ansprüche 1 bis 5, neutralisiert durch eine organische oder mineralische Base, als Verdickungsmittel für das wäßrige oder organische Milieu, oder der Systeme, enthaltend die Mischungen derselben.

## Claims

1. Crosslinked carboxylic copolymers obtained by copolymerization of an unsaturated carboxylic monomer, a crosslinking agent and, optionally, an alkyl acrylate or methacrylate, characterized in that they are obtained by copolymerizing the following monomers in the indicated proportions by weight:

a) at least 50% of at least one unsaturated carboxylic monomer,

b) from 5 to 25% of at least one ester of acrylic or methacrylic acid with a polyalkylene glycol having

the general formula:

$$CH_2 = \overset{\overset{\displaystyle R}{|}}{C} - CO_2-[R_1O]_n-H$$

in which
R is H or $CH_3$,
$R_1$ is a divalent alkylene group containing from 2 to 6 carbon atoms inclusive, and n is an integer from 2 to 25,
c) from 0 to 20% of at least one acrylic acid ester of the general formula:

$$CH_2 = \overset{\overset{\displaystyle R}{|}}{C} - COO - R_2$$

in which R is H or $CH_3$ and $R_2$ is a linear or branched alkyl group containing 4 to 20 carbon atoms, and
d) from 0.1 to 5% of at least one crosslinking agent choses from unsaturated monomers containing at least two vinyl end groups

$$CH_2 = C< .$$

2. Copolymers according to claim 1, characterized in that the unsaturated carboxylic monomer (a) is chosen from acrylic acid, methacrylic acid and maleic anhydride.

3. Copolymers according to claim 1 or 2, characterized in that the monomer (b) is chosen from diethylene glycol monoacrylate, the monoacrylate of polyethylene glycol of MW 200, the monoacrylate of polyethylene glycol of MW 1000, the monoacrylate of polypropylene glycol of MW 200, the monomethacrylate of polypropylene glycol of MW 200, the monomethacrylate of polypropylene glycol of MW 1000, and the monomethacrylate of polytetramethylene glycol of MW 650 (MW means molecular weight).

4. Copolymers according to any of claims 1 to 3, characterized in that they contain a monomer (c) chosen from 2-ethylhexyl acrylate and stearyl methacrylate.

5. Copolymers according to any of claims 1 to 4, characterized in that the crosslinking agent (d) is chosen from allyl methacrylate, trimethylolpropane diallyl ether, pentaerythritol triallyl ether and sucrose polyallyl ether.

6. Process for preparing a crosslinked carboxylic copolymer such as defined in any of claims 1 to 5, characterized in that the monomers (a), (b), (d) and, optionally, (c) are copolymerized in an inert solvent in which the monomers are soluble and the copolymers are insoluble.

7. Process according to claim 6, characterized in that benzene, ethyl acetate or methanol is employed as solvent.

8. Process according to claim 6 or 7, characterized in that the polymerization is carried out at a temperature between 25 and 100°C and with the aid of an organic catalyst.

9. Process according to claim 8, characterized in that the catalyst is chosen from azobisisobutyronitrile, lauroyl peroxide and benzoyl peroxide.

10. Use of the copolymers defined in any of claims 1 to 5, which are neutralized using an organic or inorganic base, as thickeners for aqueous media or organic media, or for systems containing mixtures thereof.